# EUROPEAN PATENT APPLICATION

(11) **EP 4 525 268 A1**
(43) Date of publication of application: **19.03.2025**
(21) Application number: 24714389.4
(22) Date of filing: 27.03.2024
(51) Int. Cl.: H02J 50/10, H02J 50/12, H02J 50/60, H02J 50/80, H02J 50/90, H02J 7/00, H02J 7/02, H02M 3/335

(54) **WIRELESS CHARGER FOR CHANGING OUTPUT VOLTAGE**

(30) Priority: 28.07.2023 KR 20230098586; 11.10.2023 KR 20230134919
(71) Applicant: Samsung Electronics Co., Ltd., Suwon-si, Gyeonggi-do 16677 (KR)
(72) Inventor: KIM, Dongzo, Suwon-si, Gyeonggi-do 16677 (KR); HA, Mincheol, Suwon-si, Gyeonggi-do 16677 (KR); SON, Keyic, Suwon-si, Gyeonggi-do 16677 (KR); LEE, Kyungmin, Suwon-si, Gyeonggi-do 16677 (KR)
(74) Representative: Appleyard Lees IP LLP
(86) International application number: PCT/KR2024/003820
(87) International publication number: WO 2025/028748

(57) **Abstract**

Provided is a wireless charger for providing power received from a power supply device to a power reception device. **In** the wireless charger, a control circuit may be configured to control a communication circuit of the wireless charger to output a second request message making a request for reducing an input voltage of a power signal input from the power supply device through a power terminal to the power supply device through a data terminal of the wireless charger, based on that the communication circuit of the wireless charger receives a first request message making a request for reducing an output voltage of the power signal output to the power reception device through a coil of the wireless charger. The control circuit may be configured to control the communication circuit to output a fourth request message making a request for increasing the input voltage to the power supply device through the data terminal, based on that the communication circuit receives a third request message making a request for increasing the output voltage.

## Description

### [Technical Field]

Embodiments of the disclosure relate to a wireless charger for changing an output voltage of a power signal output to a power reception device.

### [Background Art]

A wireless charger may receive a power signal from a power supply device (for example, a travel adapter (TA)), convert a current of the received power signal from direct current (DC) to alternating current (AC) through an inverter, and transmit the AC to a power reception device (for example, a smartphone or a wireless earphone charging case) through a coil.

The information may be provided as the related art to help understanding of the disclosure. Any opinion or decision on whether the above-mentioned content can be applied as the prior art related to the disclosure has been not provided.

### [Disclosure of Invention]

### [Technical Problem]

A wireless charger may fix a voltage value of a power signal to be transmitted from a power supply device to the wireless charger through power delivery (PD) communication with the power supply device. The wireless charger may receive a power signal having a fixed voltage value from the power supply device. The wireless charger may include a power conversion circuit configured to convert the received voltage value of the power signal to a voltage value required by the power reception device and output the power signal to an inverter. The power conversion circuit may include a buck boost converter including an inductor having a characteristic of charging a current, a capacitor having a characteristic of charging a voltage, and a switch for adjusting a ratio of an output voltage output to the inverter to an input voltage input from the power supply device.

The heat may be generated in the inductor while the power conversion circuit converts the voltage value of the power signal to be transmitted to the power reception device. As an input current value of the power signal input from the power supply device is larger, the heat generated in the inductor may be serious.

As a line of the inductor is thicker, resistance of the inductor (for example, Ron resistance) may become lower. Accordingly, heat loss of the inductor may be reduced and charging efficiency (for example, a ratio of output power output to the power reception device to input power input from the power supply device) may be higher. However, the thicker the line of the inductor, the thicker the wireless charger becomes. For example, the thickness of the inductor mounted to a printed board assembly (PBA) of the wireless charger may influence the thickness of the wireless charger. For example, an indicator having the thickness thicker or equal to about 3 mm may be included in the power conversion circuit to provide power of 15 W to the power reception device.

Various embodiments of the disclosure may provide a wireless charger capable of minimizing energy loss due to heat when power received from a power supply device is provided to a power reception device. Various embodiments of the disclosure may provide a thin wireless charger. The technical problem to be solved in the disclosure may not be limited to the above mentioned technical problem, and other technical problems which are not mentioned may be clearly understood, through the following descriptions, by those skilled in the art of the disclosure.

### [Solution to Problem]

According to an embodiment, a wireless charger includes a coil, a connector including a power terminal and a data terminal, a power transmission circuit connected to the power terminal and configured to convert a current of a power signal received from a power supply device through the power terminal from direct current (DC) to alternating current (AC) and output the AC to the coil, communication circuits connected to the data terminal and the coil and configured to communicate with the power supply device through the data terminal and communicate with a power reception device through the coil, a control circuit configured to control the power transmission circuit and the communication circuit, and a power supply circuit connected to the power terminal and configured to supply the power signal received from the power supply device through the power terminal to the communication circuit and the control circuit. According to an embodiment, The control circuit may be configured to control the communication circuit to output a second request message making a request for reducing an input voltage of the power signal input from the power supply device through the power terminal to the power supply device through the data terminal, based on the communication circuit receiving a first request message making a request for reducing an output voltage of the power signal output to the power reception device through the coil. The control circuit may be configured to control the communication circuit to output a fourth request message making a request for increasing the input voltage of the power signal input from the power supply device through the power terminal to the power supply device through the data terminal, based on the communication circuit receiving a third request message making a request for increasing the output voltage. According to an embodiment, The control circuit may be configured to control the communication circuit to output a second request message making a request for reducing an input voltage of the power signal input from the power supply device through the power terminal to the power supply device through the data terminal, as a result of the communication circuit receiving a first request message making a request for reducing an output voltage of the power signal output to the power reception device through the coil. The control circuit may be configured to control the communication circuit to output a fourth request message making a request for increasing the input voltage of the power signal input from the power supply device through the power terminal to the power supply device through the data terminal, as a result of the communication circuit receiving a third request message making a request for increasing the output voltage.

According to an embodiment, a method of operating a wireless charger may include receiving a message making a request for changing an output voltage of a power signal output to a power reception device through a coil of the wireless charger through the coil. The method may include outputting a message making a request for changing an input voltage of a power signal input from a power supply device through a power terminal of the wireless charger to the power supply device through a data terminal of the wireless charger, based on the message making the request for changing the output voltage being received. The outputting of the message making the request for changing the input voltage may include an operation of outputting a second request message making a request for reducing the input voltage to the power supply device through the data terminal, based on a first request message making a request for reducing the output voltage being received and an operation of outputting a fourth request message making a request for increasing the input voltage to the power supply device through the data terminal, based on a third request message making a request for increasing the output voltage being received.

### [Advantageous Effects of Invention]

According to an embodiment of the disclosure, a wireless charger can minimize energy loss due to heat when power received from a power supply device is provided to a power reception device. A thickness of the wireless charger may become thinner. In addition, various effects directly or indirectly obtained can be provided through the disclosure.

### [Brief Description of Drawings]

FIG. 1 is a block diagram illustrating an electronic device within a network environment according to various embodiments.
FIG. 2 is a block diagram of a wireless charging system according to an embodiment.
FIG. 3 is a flowchart illustrating operations in which a power supply device supplies power to a power reception device through a wireless charger according to an embodiment.
FIG. 4 is a flowchart illustrating operations of a wireless charger to change a voltage value of a power signal input from a power supply device, based on a request from a power reception device, according to an embodiment.
FIG. 5 is a flowchart illustrating operations of a wireless charger to reduce an output voltage of the wireless charger, based on a request from a power reception device, according to an embodiment.
FIG. 6 is a flowchart illustrating operations of a wireless charger to increase an output voltage of the wireless charger, based on a request from a power reception device, according to an embodiment.
FIG. 7 is a flowchart illustrating operations of a wireless charger to reduce an output voltage of the wireless charger, based on a request from a power reception device, according to an embodiment.
FIG. 8 is a flowchart illustrating operations of a wireless charger to increase an output voltage of the wireless charger, based on a request from a power reception device, according to an embodiment.

Hereinafter, embodiments of the disclosure are described in detail to allow those skilled in the art to which the disclosure belongs to easily implement the disclosure with reference to the drawings. However, the disclosure may be implemented in various different forms and is not limited to embodiments described herein. In connection with description of the drawings, the same or similar reference numerals can be used for the same or similar elements. Further, in drawings and relevant description, description of well known functions and configurations may be omitted for clarity and brevity.

### [Mode for the Invention]

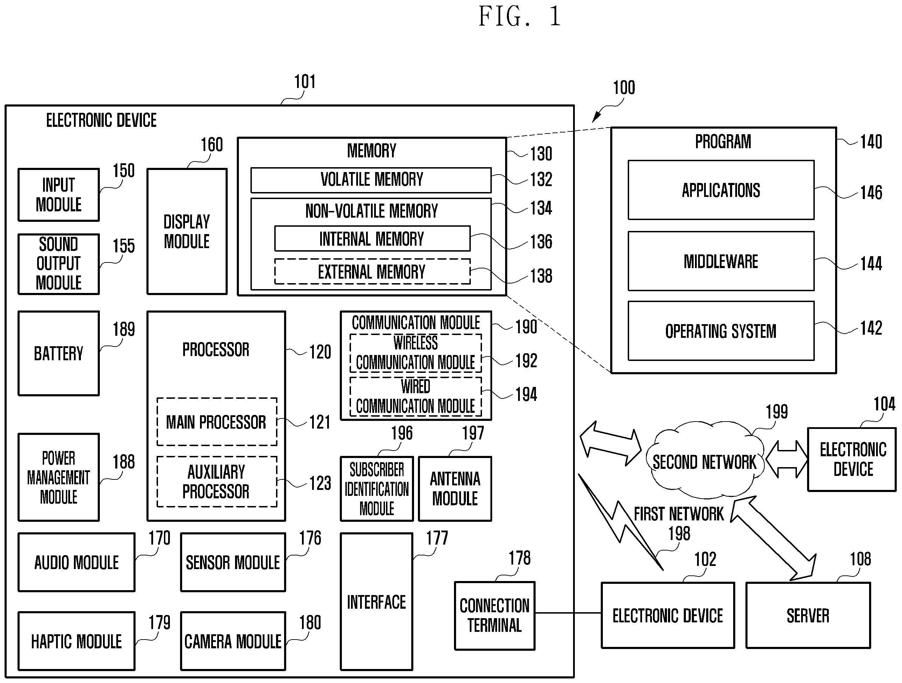

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

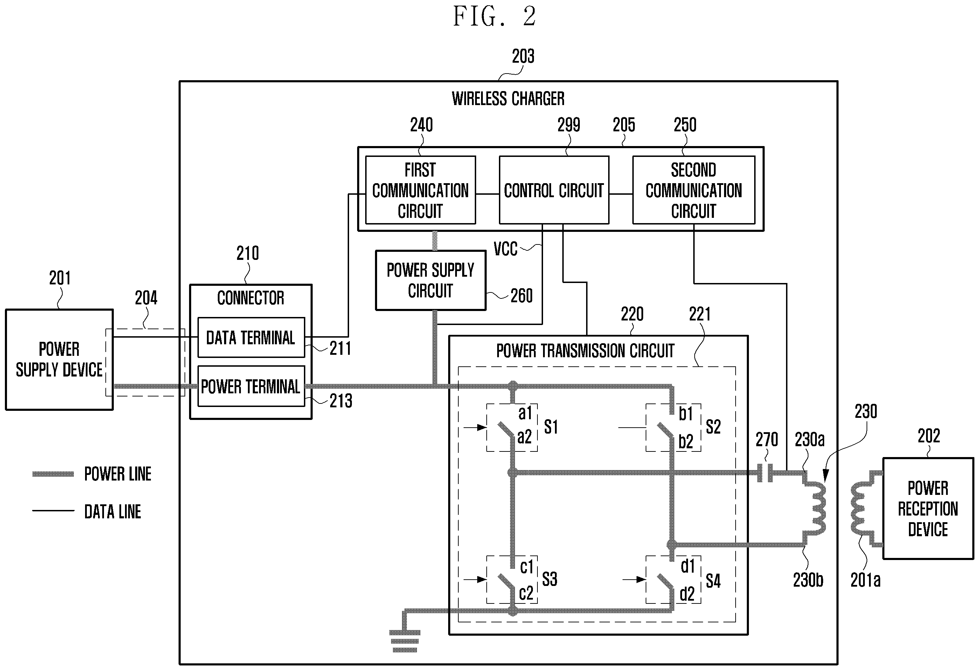

FIG. 2 is a block diagram of a wireless charging system according to an embodiment. Referring to FIG. 2, the wireless charging system may include a power supply device 201, a power reception device 202 (for example, the electronic device 101 of FIG. 1), and a wireless charger 203. The wireless charger 203 may include a connector 210, a power transmission circuit 220, a coil 230, a first communication circuit 240, a second communication circuit 250, a power supply circuit 260, and a control circuit 299. The wireless charger 203 may receive power from the power supply device 201 through a cable (for example, a USB Type-C cable) 204 and transmit the power to the power reception device 202 through the coil 230. The wireless charger 203 may perform data communication with the power supply device 201 for power reception through the connector 210. The wireless charger 203 may perform data communication with the power reception device 202 for power transmission through the coil 230.

The power supply device (for example, a travel adapter) 201 (for example, the electronic device 102 of FIG. 1) may convert a current characteristic of a power signal from an external power source from the alternating current (AC) to the direct current (DC) and adjust a voltage of the power signal to a predetermined voltage value. The power supply device 201 may be electrically connected to the wireless charger 203 through the cable 204. The power supply device 201 may transmit the power signal having the adjusted voltage and the current characteristic converted to the DC to the wireless charger 203 through the cable 204.

The power supply device 201 may supply a programmable power supply (PPS) of adjusting the voltage value of the power signal according to a request from an external device while the power signal is transmitted to the external device. For example, the power supply device 201 may transmit a power signal having a voltage value requested by the wireless charger 203 in a predetermined voltage range (for example, 3.3 to 11 V, 3.3 to 16 V, or 3.3 to 21 V) to the wireless charger 203. The power supply device 201 may transmit a power signal having a fixed voltage value to the external device. For example, the power supply device 201 may transmit a list of power data objects (PDOs) to the wireless charger 203 through the cable 210. The power supply device 201 may transmit a power signal having a fixed voltage value (for example, 5 V, 9 V, 15 V, or 20 V) selected from the PDO list to the wireless charger 203. The fixed voltage value may mean that the voltage is fixed when the power supply device 201 supplies power to the wireless charger 203.

In the wireless charger 203, the connector 210 may include a data terminal 211 for data communication with the power supply device 201 and a power terminal 213 for receiving a power signal from the power supply device 201. For example, the connector 210 may include a socket according to universal serial bus (USB) Type-C. The socket may be combined with a plug of the cable 204. Among pins of the USB Type-C socket, a VBUS pin may be used as the power terminal 213 and a (configuration channel) CC pin and/or a differential signal (DP (D+) or DN (D-)) may be used as the data terminal 211.

The power transmission circuit 220 may be electrically connected to the power terminal 213 and, in order to wirelessly transmit a power signal through the coil 230, may be configured to convert the current of the power signal received from the power supply device 201 from the DC to the AC through the power terminal 213. The expression "connection" in the disclosure may be not only a direct connection between elements but also an electrical connection between elements via another element therebetween (for example, a resistor, an inductor, or the like). The power transmission circuit 220 may include the inverter (for example, a full bridge circuit) 221 configured to periodically convert a direction of the current. For example, the inverter 221 may include four switches S1, S2, S3, and S4. One end (a1) of S1 and one end (b1) of S2 may be connected to the power terminal 213, and one end (c1) of S3 and one end (d1) of S4 may be connected to the other end (a2) of S1 and the other end (b2) of S2. The other end (c2) of S3 and the other end (d2) of S4 may be connected to the ground (for example, a GND pin of the connector 210). The other end (a2) of S1 and one end (c1) of S3 may be connected to one end 230a of the coil 230. The other end (b2) of S2 and one end (d1) of S4 may be connected to the other end 230b of the coil 230. When S1 and S4 are in a closed state (or an on state), conversely, S2 and S3 may be in an open state (or an off state) (hereinafter, referred to as a first switching state). When S1 and S4 are in the open state, S2 and S3 may be in the closed state (hereinafter, referred to as a second switching state). A control circuit 299 may control the inverter 221 to alternate a first switching state and a second switching state periodically according to the wireless charging standard (for example, according to a frequency band (for example, about 110 to 148 kHz) predetermined by the international standard (for example, EN 300-330-1)). Accordingly, the current of the power signal received by the power transmission circuit 220 may be converted from the DC to the AC by the inverter 221 and transferred to the power reception device 202 through the coil 230. Each switch may include, for example, a field effect transistor (FET). A drain terminal and a source terminal of the FET may correspond to the one end and the other end described above. The control circuit 299 may output a first control signal (for example, a signal having a predetermined first voltage level) to a gate terminal of the FET, so as to make the corresponding switch be in the closed state. The control circuit 299 may output a second control signal (for example, a signal having a predetermined second voltage level lower than the first voltage level), so as to make the corresponding switch be in the open state.

The power transmission circuit 220 may change a voltage value of the power signal output from the power transmission circuit 220 to the power reception device 202 through the coil 230, based on the control of the control circuit 229. For example, the control circuit 299 may raise a frequency of the power signal output from the inverter 221 to the coil 230 by making a cycle of the first switching state and the second switching state shorter. When the frequency of the power signal is raised, resistance of the coil 230 may increase and, accordingly, the voltage of the power signal output from the inverter 221 to the coil 230 may decrease. In contrast, the control circuit 299 may lower the frequency of the power signal output from the inverter 221 to the coil 230 by making the cycle of the first switching state and the second switching state longer. When the frequency of the power signal is lowered, resistance of the coil 230 may decrease and, accordingly, the voltage of the power signal output from the inverter 221 to the coil 230 may increase.

According to an embodiment, the coil 230 may be a spiral-type coil wound several times in a clockwise direction or a counterclockwise direction from the axis perpendicular to a plane of a charging pad of the wireless charger 203 on which the power reception device 202 is put. By electrical coupling between the coil 230 and the coil 201a of the power reception device 202, the power signal may be supplied from the wireless charger 203 to the power reception device 202. The coil 230 may be used as an antenna for data communication (for example, in-band communication) between the wireless charger 203 and the power reception device 202 as well as power transmission.

A first communication circuit (for example, a USB controller) 240 may identify the type of the external device connected to the data terminal 211 and connected to the connector 210, based on data received from the external device through the data terminal 211. The first communication circuit 240 may transmit identification information indicating the type of the external device to the control circuit 299. The control circuit 299 may perform communication according to a predetermined protocol for power delivery (PD) communication with the external device through the communication circuit 350, based on the identification information, so as to perform an operation of negotiating with the external device and the wireless charger 203 about a source for supplying power and a sink for receiving power. For example, as the external device is recognized as the power supply device (for example, the travel adapter (TA)) 201, the power supply device 201 may be determined as the source and the wireless charger 203 may be determined as the sink. After the coupling, the control circuit 299 may perform an operation of negotiating a voltage value of a power signal to be transmitted from the power supply device 201 by performing communication with the power supply device 201 through the first communication circuit 240 according to a PD communication protocol (for example, power data objects (PDO) or programmable power supply (PPS)). The control circuit 299 may control the first communication circuit 240 to transmit a message making a request for transmitting the power signal having the voltage value determined by the negotiation result to the power supply device 201.

The second communication circuit 250 may be connected to the coil 230 and may perform data communication with the power reception device 202 through the coil 230. For example, the second communication circuit 250 may receive a data signal from the control circuit 299, carry the received data signal on the power signal transmitted to the power reception device 202, and transmit the power signal to the power reception device 202. A method of carrying the data signal on the power signal may include, for example, a scheme of modulating amplitude and/or frequency of the power signal. The second communication circuit 250 may receive a data signal from the power reception device 202 through the coil 230. For example, the second communication circuit 250 may acquire a data signal which the power reception device 202 transmits to the wireless charger 203 through its own coil 201a by demodulating the power signal transmitted from the coil 230 of the wireless charger 203 to the coil 201a of the power reception device 202. The second communication circuit 250 may transfer the data signal acquired from the power signal to the control circuit 299.

According to an embodiment, the power supply circuit 260 may be connected to the power terminal 213 and driven by the power signal received from the power supply device 201 through the power terminal 213. The power supply circuit 260 may be configured to output the power signal received from the power supply device 201 through the power terminal 213 to the first communication circuit 240, the second communication circuit 250, and the control circuit 299 as driving power for driving the first communication circuit 240, the second communication circuit 250, and the control circuit 299. The power supply circuit 260 may include a DC-DC converter for adjusting a voltage (output voltage) of the power signal output from the power supply circuit 260. For example, the power supply circuit 260 may include a buck converter for reducing an output voltage against a voltage (input voltage) of the power signal received from the power supply device 201 through the power terminal 213. The power supply circuit 260 may include a boost converter for increasing the output voltage against the input voltage. When a power signal having an input voltage higher than a predetermined voltage value (for example, 5 V) is received, the power supply device 260 may reduce the output voltage up to the predetermined voltage value through the buck converter and output the power signal having the reduced output voltage to the first communication circuit 240, the second communication circuit 250, and the control circuit 299. When a power signal having an input voltage lower than a predetermined voltage value (for example, 5 V) is received, the power supply circuit 260 may increase the output voltage up to the predetermined voltage value through the boost converter and output the power signal having the increased output voltage to the first communication circuit 240, the second communication circuit 250, and the control circuit 299.

The control circuit 299 may wake up by the driving power supplied from the power supply circuit 260 and perform data communication with the power supply device 201 through the first communication circuit 240. The control circuit 299 may identify whether the power supply device 201 is a programmable power supply (PPS)-supporting model through data communication with the power supply device 201. For example, the control circuit 299 may receive information indicating the specification of power which can be supplied by the power supply device 302 from the power supply device 201 through the first communication circuit 240. Based on that the received information contains PPS information indicating a range of the voltage which can be supplied by the power supply device 201 (for example, 3.3 to 11 V, 3.3 to 16 V, or 3.3 to 21 V), the control circuit 299 may identify that the power supply device 201 is the PPS-supporting model. The received information may contain, for example, a list of power data objects (PDOs) as information indicating a fixed voltage value and a rated current value corresponding thereto. For example, the received PDO list may include information indicating 15 W (5 V * 3 A), 27 W (9 V * 3 A), 45 W (15 V * 3 A), 60 W (20 V * 3 A), or 65 W (20 V * 3.25 A)" as power that can be supplied. The control circuit 299 may identify that the power supply device 201 as a mode that does not support PPS, based on that the information received from the power supply device 201 contains only the PDO list without PPS information.

The control circuit 299 may receive a feedback signal for controlling power supply from the power reception device 202 via the second communication circuit 250 through the coil 230 while the power signal is transmitted from the wireless charger 203 to the power reception device 202 through the coil 230. The feedback signal may include a control error packet (CEP) defined in the WPC standard. The control error packet may include a control error value (CEV). For example, the CEV may be an integer between -127 and +128.

The control circuit 299 may change the voltage (output voltage) of the power signal output from the power transmission circuit 220 to the power reception device 202 through the coil 230, based on the CEV received from the power reception device 202 while the power transmission circuit 220 outputs the power signal to the power reception device 202 through the coil 230. The CEV may include a value determined by difference between a rated voltage value acquired by rectifying the power signal received by the power reception device 202 through the coil 201a and a target voltage value predetermined by the power reception device 302. The target voltage value may be, for example, a voltage of a battery in a state where the battery of the power reception device 202 is fully charged. The full charge may mean a state of charge (SOC) when a charging rate of the battery reaches 100% that is a maximum charging amount configured without fear of burning or explosion. For example, when the difference between the rated voltage and the target voltage is within a predetermined error range, the CEV may be configured as "0" by the power reception device 202. In the wireless charger203, when the CEP having the CEV of "0" is received from the power reception device 202 through the second communication circuit 250, the control circuit 299 may maintain the output voltage without any change. The power reception device 202 may transmit the CEP including a negative CEV to the wireless charger 203 in order to reduce the power value for charging the battery. When the CEV is a negative number, the control circuit 299 may reduce the power voltage by controlling the power supply device 201 and/or the power transmission circuit 220. The power reception device 202 may transmit a CEP including a positive CEV to the wireless charger 203 in order to increase the power value for charging the battery. When the CEV is a positive number, the control circuit 299 may increase the output voltage by controlling the power supply device 201 and/or the power transmission circuit 220. When an end signal (for example, a packet (for example, CS 100 packet) transmitted by the power reception device 302 as battery charging is completed) is received from the power reception device 202 through the second communication circuit 250, the control circuit 299 may control the power transmission circuit 220 to end the output of the power signal to the coil 230. For example, the control circuit 299 may stop outputting the power signal by maintaining a voltage level of the control signal output to the switches S1, S2, S3, and S4 in a second voltage level.

According to an embodiment, the control circuit 299, the first communication circuit 240, and the second communication circuit 250 may be integrated into one wireless charging Integrated circuit (IC) 205. For example, the wireless charging IC 205 may be configured to perform wireless communication with the power supply device 201 through the data terminal 211. The wireless charging IC 205 may be configured to perform wireless communication with the power reception device 202 through the coil 230. The wireless charging IC 205 may be configured to control the power supply device 201 and/or the power transmission circuit 220, based on wired/wireless communication.

According to an embodiment, the wireless charger 203 may further include a matching circuit 270 for minimizing return loss of the power signal. For example, the matching circuit 270 may be inserted into a transmission line between the coil 230 and the power transmission circuit 220 and, accordingly, the transmission line may match with specific impedance. The matching circuit 270 is a lumped element and may include at least one of a resistor, an inductor, or a capacitor. The matching circuit 270 is a distributed element and may further include a strip line.

According to the configuration of the wireless charger 203 of FIG. 2, a power conversion circuit may be omitted from the power line between the power terminal 213 and the power transmission circuit 220. Accordingly, when the power signal is transferred from the power supply device 201 to the power reception device 202 through the wireless charger 203, heating due to the inductor of the power conversion circuit is not generated. Further, due to omission of the inductor between the power terminal 213 and the power transmission circuit 220, thickness of the wireless charger 203 may become thinner.

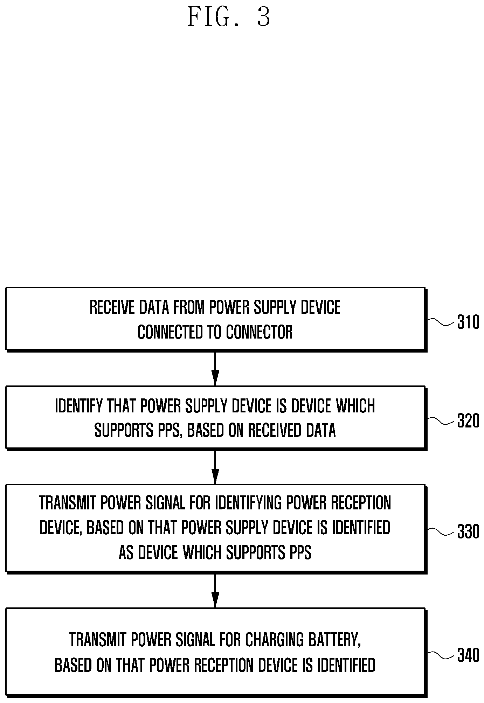

FIG. 3 is a flowchart illustrating operations in which a power supply device (for example, the power supply device 201 of FIG. 2) supplies power to a power reception device (for example, the power reception device 202 of FIG. 2) through a wireless charger (for example, the wireless charger 203 of FIG. 2) according to an embodiment.

In operation 310, the control circuit 299 may receive data from a power supply device (for example, 201 of FIG. 2) through the first communication circuit 240.

In operation 320, the control circuit 299 may identify that the power supply device 201 is a device supporting PPS, based on the data received from the power supply device 201. For example, when the data received from the power supply device 201 includes information indicating one or more voltage ranges (for example, 3.3 to 11 V, 3.3 to 16 V, or 3.3 to 21 V), the control circuit 299 may recognize the power supply device 201 as a PPS-supporting model.

In operation 330, the control circuit 299 may control the power transmission circuit 220 to transmit a power signal that aims at identifying the power reception device 202, based on that the power supply device 201 is identified as the device supporting PPS. According to an embodiment, the control circuit 299 may select one of the voltage ranges. For example, when a TA supporting 25 W is connected to the connector 210 as the power supply device 201, the control circuit 299 may receive information indicating that PPS can be supported in the voltage range of 3.3 to 5.9 V or 3.3 to 11 V from the power supply device 201. The control circuit 299 may select the voltage range of 3.3 to 11 V as a range of an input voltage (voltage of the power signal input from the power supply device 201 through the power terminal 213) from among the voltage ranges. When a TA supporting 45 W is connected to the connector 210, the control circuit 299 may receive information indicating that PPS can be supported in the voltage range of 3.3 to 11 V, 3.3 to 16 V, or 3.3 to 21 V from the power supply device 201. The control circuit 299 may select the voltage range of 3.3 to 21 V as the range of the input voltage from among the voltage ranges. The control circuit 299 may configure an input voltage (for example, 5 V) in the selected voltage range. The control circuit 299 may transmit data indicating the selected voltage range and the input voltage determined in the range to the power supply device 201 through the first communication circuit 240. The power supply device 201 may determine the range of the input voltage, based on the data received from the wireless charger 203. The power supply device 201 may determine an output voltage, based on the data received from the wireless charger 203 and output a power signal having the determined output power to the wireless charger 203. The control circuit 299 may control the power transmission circuit 220 to convert the power signal received from the power supply device 201 through the power terminal 213 into a power signal having a predetermined frequency (for example, 127.7 kHz) and output the converted power signal to the coil 230. The control circuit 299 may identify the power reception device 202, based on that a response (for example, a signal strength packet (SSP)) to transmission of the power signal is received from the second communication circuit 250.

In operation 340, the control circuit 299 may control the power transmission circuit 220 to transmit a power signal that aims at charging the battery of the power reception device 202, based on that the power reception device 202 is identified. For example, the control circuit 299 may configure the input voltage in the selected voltage range through data communication with the power reception device 202. The control circuit 299 may control the power transmission circuit 220 to convert the power signal received from the power supply device 201 through the power terminal 213 into a power signal having a predetermined frequency (for example, 127.7 kHz) and output the converted power signal to the coil 230.

According to an embodiment, the wireless charger 203 may include a display device for visually providing information on wireless charging. For example, the wireless charger 203 may include a light emitting diode (LED) (for example, an orange LED) for informing that the power supply device 201 connected to the connector 210 is a device which does not support PPS. When there is no voltage range in the data received from the power supply device 201, the control circuit 299 may recognize the power supply device 201 as the device which does not support PPS. When the power supply device 201 is recognized as the device which does not support PPS, the control circuit 299 may turn on the LED included in the wireless charger 203 or make the LED flicker to indicate that wireless charging is impossible.

According to an embodiment, when the power supply device 201 is recognized as the device which does not support PPS, the control circuit 299 may fix an input voltage to one in the PDO list and control a frequency of a power signal output from the inverter 221 to the coil 230, so as to adjust an output voltage of the power transmission circuit 220 (a voltage of a power signal output from the power transmission circuit 220 to the power reception device 202 through the coil 230).

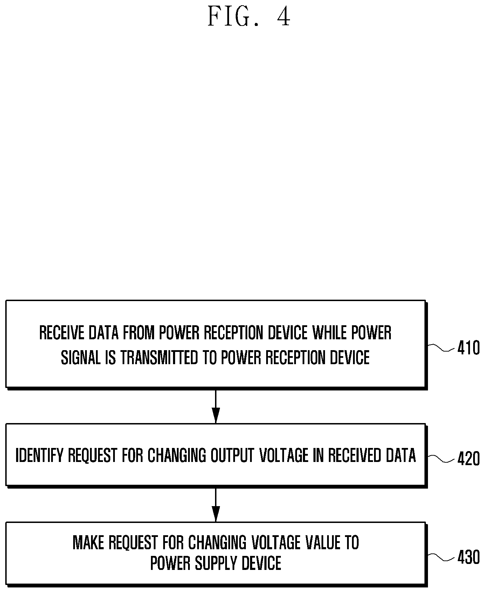

FIG. 4 is a flowchart illustrating operations of the wireless charger 203 to change a voltage value of a power signal input from the power supply device 201, based on a request from the power reception device 202, according to an embodiment.

In operation 410, the control circuit 299 may receive data from a power reception device while a power signal is transmitted from the power transmission circuit 220 to the power reception device 202 through the coil 230 (for example, while operation 340 is performed).

In operation 420, the control circuit 299 may identify a request for changing an output voltage (a voltage of a power signal output from the power transmission circuit 220 to the power reception device 202 through the coil 230) in the received data.

In operation 430, the control circuit 299 may transmit a message making a request for changing a voltage value to the power supply device 201 through the first communication circuit 240, based on that the request for changing the output voltage is identified in the received data. The control circuit 299 may transmit a second request message making a request for reducing the input voltage to the power supply device 201 through the second communication circuit 240, based on that a first request message (for example, a CEP including a negative CEV) making a request for reducing the output voltage is received from the power reception device 202. The control circuit 299 may transmit a fourth request message making a request for increasing the input voltage to the power supply device 201 through the second communication circuit 250, based on that a third request message (for example, a CEP including a positive CEV) making a request for increasing the output voltage is received from the power reception device 202.

According to an embodiment, the control circuit 299 may identify a control error value (CEV) in the received data and make a request for changing an input voltage value to the power supply device 201, based on the identified CEV. As a PPS function of the power supply device 201, voltage resolution may be several mV (for example, about 20 mV). For example, the control circuit 299 may transmit the identified CEV to the power supply device 201. The power supply device 201 may gradually increase or reduce the voltage output to the wireless charger 203 by several mV n times (an absolute value of the CEV). When the CEV is -8, the power supply device 201 may gradually reduce the voltage output to the wireless charger 203 by several Vm 8 times.

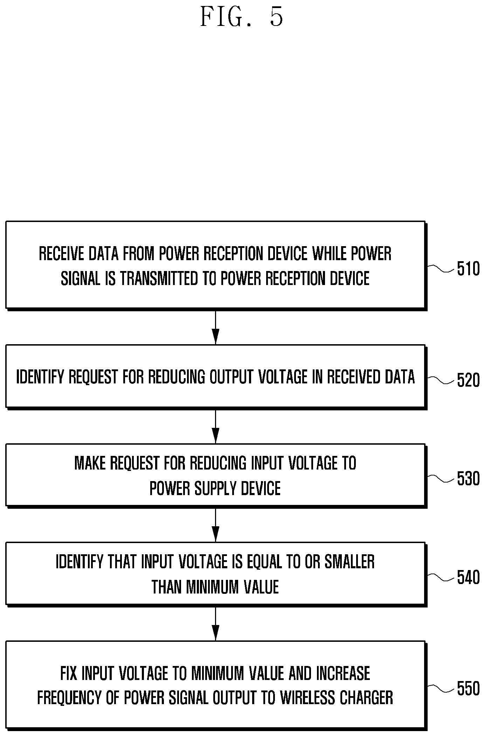

FIG. 5 is a flowchart illustrating operations of the wireless charger 203 to reduce an output voltage of the wireless charger 203, based on a request from the power reception device 202, according to an embodiment.

In operation 510, the control circuit 299 may receive data from a power reception device while a power signal is transmitted from the power transmission circuit 220 to the power reception device 202 through the coil 230 (for example, while operation 340 is performed).

In operation 520, the control circuit 299 may identify a request (for example, a CEP including a negative CEV value) for reducing the output voltage in the received data.

In operation 530, the control circuit 299 may transmit a message making a request for reducing the input voltage to the power supply device 201 through the first communication circuit 240, based on that the request for reducing the output voltage is identified in the received data.

In operation 540, the control circuit 299 may identify that the output voltage (the voltage (VCC; see FIG. 2) of the power signal output from the power supply device 201 to the power transmission circuit 220 through the power terminal 213) of the power terminal 213 corresponding to the input voltage is equal to or smaller than a predetermined minimum value. The minimum value may correspond to a minimum value (for example, 3.3 V) in the selected voltage range (for example, the voltage range selected to perform operation 340).

In operation 550, based on that the input voltage is identified as being equal to or smaller than the minimum value, the control circuit 299 may control the power transmission circuit 220 to transmit a message making a request for fixing the input voltage to the minimum value to the power supply device 201 through the first communication circuit 240 and increase a frequency of the power signal output from the wireless charger 203 to the power reception device 202. As the frequency of the power signal output from the wireless charger 203 to the power reception device 202 is increased, the voltage of the power signal output from the wireless charger 203 to the power reception device 202 may be reduced.

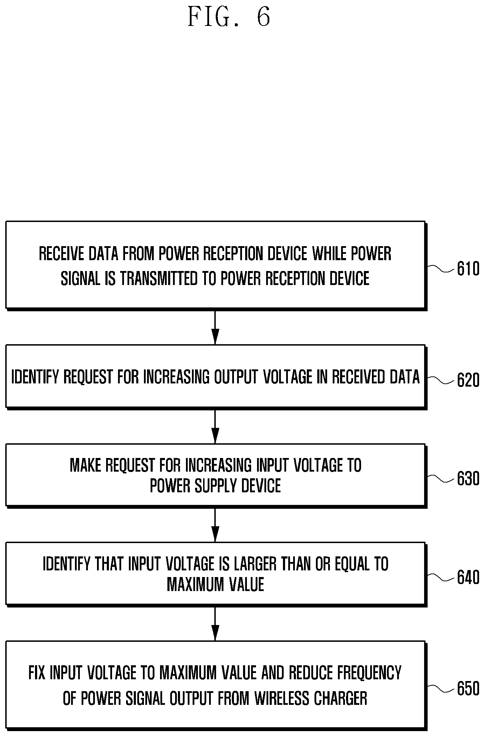

FIG. 6 is a flowchart illustrating operations of the wireless charger 203 to increase an output voltage of the wireless charger 203, based on a request from the power reception device 202, according to an embodiment.

In operation 610, the control circuit 299 may receive data from a power reception device while a power signal is transmitted from the power transmission circuit 220 to the power reception device 202 through the coil 230 (for example, while operation 340 is performed).

In operation 620, the control circuit 299 may identify a request (for example, a CEP including a positive CEV value) to increase the output voltage in the received data.

In operation 630, the control circuit 299 may transmit a message making a request for increasing an input voltage to the power supply device 201 through the first communication circuit 240, based on that the request for increasing the output voltage is identified in the received data.

In operation 640, the control circuit 299 may identify that the input voltage (VCC; see FIG. 2) is larger than or equal to a predetermined maximum value. The maximum value may correspond to a maximum value (for example, 11 V) in the selected voltage range (for example, the voltage range selected to perform operation 340).

In operation 650, based on that the input voltage is identified as being larger than or equal to the maximum value, the control circuit 299 may control the power transmission circuit 220 to transmit a message making a request for fixing the input voltage to the maximum value to the power supply device 201 through the first communication circuit 240 and reduce the frequency of the power signal output from the wireless charger 203 to the power reception device 202. As the frequency of the power signal output from the wireless charger 203 to the power reception device 202 is reduced, the voltage of the power signal output from the wireless charger 203 to the power reception device 202 may be increased.

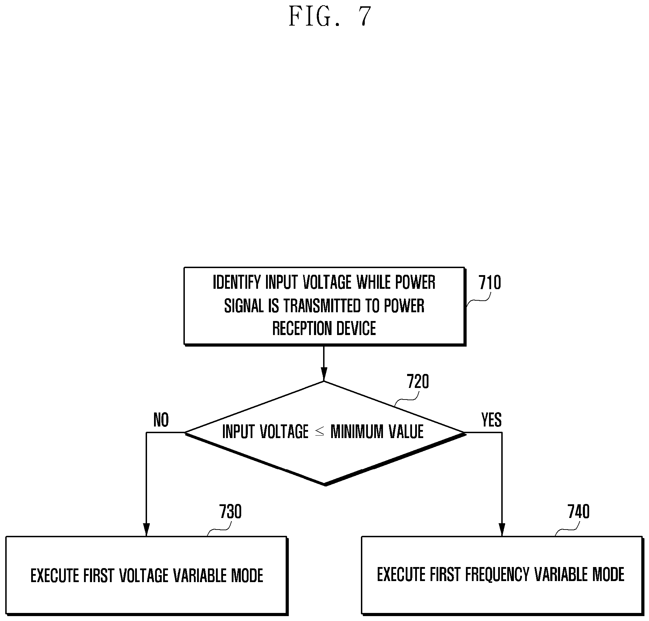

FIG. 7 is a flowchart illustrating operations of the wireless charger 203 to reduce an output voltage of the wireless charger 203, based on a request from the power reception device 202, according to an embodiment.

In operation 710, the control circuit 299 may periodically identify an input voltage (VCC; see FIG. 2) while a power signal is transmitted from the power transmission circuit 220 to the power reception device 202 through the coil 230 (for example, while operation 340 is performed).

In operation 720, the control circuit 299 may identify whether the input voltage is equal to or smaller than a minimum value.

When the input voltage is larger than the minimum value, the control circuit 299 may execute a first voltage variable mode in operation 730. For example, the control circuit 299 may identify a negative CEV in data received from the power reception device 202. The control circuit 299 may transmit a message making a request for reducing the input voltage to the power supply device 201 through the first communication circuit 240, based on that the negative CEV is identified in the received data. After transmitting the message, the control circuit 299 may identify the CEV in data received from the power reception device 202. When the identified CEV is "0", the control circuit 299 may end the first voltage variable mode. When the identified CEV is still negative, the control circuit 299 may transmit a message making a request for further reducing the input voltage to the power supply device 201 through the first communication circuit 240. The control circuit 299 may repeatedly perform an operation of identifying the CEV in the received data and making the request for reducing the input voltage to the power supply device 201 until the CEV converges on "0".

When the input voltage is equal to or smaller than the minimum value, the control circuit 299 may execute a first frequency variable mode in operation 740. For example, the control circuit 299 may transmit a message making a request for fixing the input voltage to the minimum value to the power supply device 201 through the first communication circuit 240. The control circuit 299 may identify a negative CEV in data received from the power reception device 202. The control circuit 299 may control the power transmission circuit 220 to increase the frequency of the output signal output from the wireless charger 203 to the power reception device 202, based on that the negative CEV is identified in the received data. After increasing the frequency, the control circuit 299 may identify the CEV in the data received from the power reception device 202. When the identified CEV is "0", the control circuit 299 may end the first frequency variable mode. When the identified CEV is still negative, the control circuit 299 may control the power transmission circuit 220 to further increase the frequency of the power signal output to the power reception device 202. The control circuit 299 may repeatedly perform an operation of identifying the CEV in the received data and gradually increasing the frequency until the CEV converges on "0" or the frequency reaches a maximum value (for example, 145 Khz).

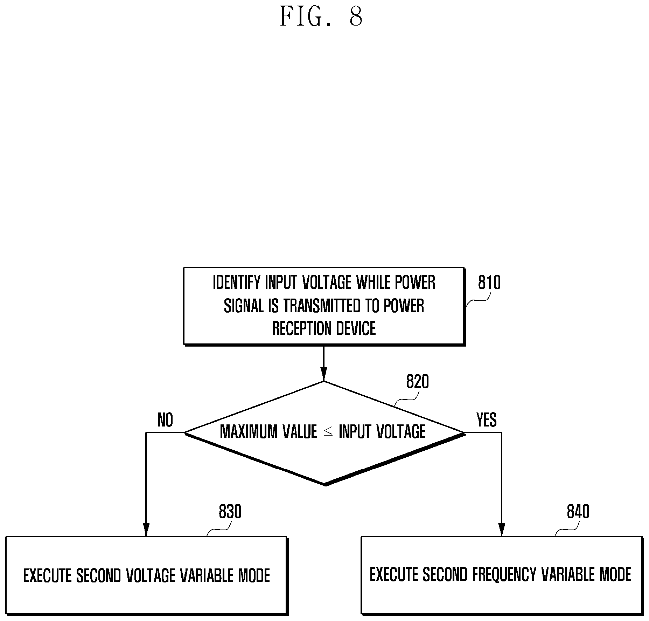

FIG. 8 is a flowchart illustrating operations of the wireless charger 203 to increase an output voltage of the wireless charger 203, based on a request from the power reception device 202, according to an embodiment.

In operation 810, the control circuit 299 may periodically identify an input voltage (VCC; see FIG. 2) while a power signal is transmitted from the power transmission circuit 220 to the power reception device 202 through the coil 230 (for example, while operation 340 is performed).

In operation 820, the control circuit 299 may identify whether the input voltage is larger than or equal to a maximum value. Operation 810 may correspond to, for example, operation 710, and operation 820 and operation 720 may be performed at the same time.

When the input voltage is smaller than the maximum value, the control circuit 299 may perform a second voltage variable mode in operation 830. For example, the control circuit 299 may identify a positive CEV in data received from the power reception device 202. The control circuit 299 may transmit a message making a request for increasing the input voltage to the power supply device 201 through the first communication circuit 240, based on that the positive CEV is identified in the received data. After transmitting the message, the control circuit 299 may identify the CEV in data received from the power reception device 202. When the identified CEV is "0", the control circuit 299 may end the second voltage variable mode. When the identified CEV is still positive, the control circuit 299 may transmit a message making a request for further increasing the input voltage to the power supply device 201 through the first communication circuit 240. The control circuit 299 may repeatedly perform an operation of identifying the CEV in the received data and making the request for increasing the input voltage to the power supply device 201 until the CEV converges on "0".

When the input voltage is larger than or equal to the maximum value, the control circuit 299 may execute a second frequency variable mode in operation 840. For example, the control circuit 299 may transmit a message making a request for fixing the input voltage to the maximum value to the power supply device 201 through the first communication circuit 240. The control circuit 299 may identify a positive CEV in data received from the power reception device 202. The control circuit 299 may control the power transmission circuit 220 to reduce a frequency of a power signal output from the wireless charger 203 to the power reception device 202, based on that the positive CEV is identified in the received data. After reducing the frequency, the control circuit 299 may identify the CEV in the data received from the power reception device 202. When the identified CEV is "0", the control circuit 299 may end the second frequency variable mode. When the identified CEV is still positive, the control circuit 299 may control the power transmission circuit 220 to further reduce the frequency of the power signal output to the power reception device 202. The control circuit 299 may repeatedly perform an operation of identifying the CEV in the received data and gradually reducing the frequency until the CEV converges on "0" or the frequency reaches a minimum value (for example, 110 Khz).

The time spent by the power supply device 201 to change the voltage may be shorter than a transmission period of the CEP from the power reception device 202 to the wireless charger 203. For example, when the CEP transmission period may be about 150 ms when an absolute value of the CEV is smaller than 8, and the CEP transmission period may be about 55 ms and the time spent to change the voltage may be about 32 ms when the absolute value of the CEV is larger than or equal to 8 (for example, the absolute value of the CEV may be larger than or equal to 8 when alignment between the coils 230 and 201a is even). Accordingly, the wireless charger 203 may control the power supply device 201 to rapidly cope with the change in the CEV.

Voltage resolution of the power supply device 201 may satisfy voltage resolution required by the power reception device 202. For example, when a range of the CEV is 256 stages (-127 to +128) and the selected voltage range (for example, the voltage range selected to perform operation 340) is 3.3 V to 10 V, the voltage resolution required by the power reception device 202 may be 30 mV. When the voltage resolution of the power supply device 201 is smaller than the voltage resolution 30 mV, the CEV may converge on 0. After the CEV converges on 0, stable power supply from the power supply device 201 to the power reception device 202 is possible through relay of the wireless charger 203 without any change in the output voltage.

In the description of the disclosure, the wireless charger 203 may be expressed interchangeably with, for example, a power relay device or a wireless charging relay device.

According to an embodiment, a wireless charger (for example, 203 of FIG. 2) may include a coil, a connector including a power terminal and a data terminal, a power transmission circuit connected to the power terminal and configured to convert a current of a power signal received from a power supply device (for example, 201 of FIG. 2) through the power terminal from a direct current (DC) to an alternating current (AC) and output the AC to the coil, communication circuits (for example, 240 and 250 of FIG. 2) connected to the data terminal and the coil and configured to communication with the power supply device through the data terminal and communicate with a power reception device (for example, 202 of FIG. 2) through the coil, a control circuit configured to control the power transmission circuit and the communication circuit, and a power supply circuit connected to the power terminal and configured to supply the power signal received from the power supply device through the power terminal to the communication circuit and the control circuit. The control circuit may be configured to control the communication circuit to output a second request message making a request for reducing an input voltage of the power signal input from the power supply device through the power terminal to the power supply device through the data terminal, based on that the communication circuit receives a first request message making a request for reducing an output voltage of the power signal output to the power reception device through the coil. The control circuit may be configured to control the communication circuit to output a fourth request message making a request for increasing the input voltage to the power supply device through the data terminal, based on that the communication circuit receives a third request message making a request for increasing the output voltage.

The control circuit may be configured to control the communication circuit to output the second request message to the power supply device through the data terminal, based on that a control error value (CEV) included in the first request message is a negative number. The control circuit may be configured to control the communication circuit to output the fourth request message to the power supply device through the data terminal, based on that a CEV included in the third request message is a positive number. The control circuit may be configured to set the input voltage in proportion to the CEV.

The control circuit may be configured to increase a frequency of the power signal output from the power transmission circuit to the coil, based on that the communication circuit receives the message making the request for reducing the output voltage in a state where the input voltage is fixed to a minimum value.

The control circuit may be configured to reduce a frequency of the power signal output from the power transmission circuit to the coil, based on that the communication circuit receives the message making the request for increasing the output voltage in a state where the input voltage is fixed to a maximum value.

The communication circuit and the control circuit may be included in one chip. The communication circuit may include a microcontroller unit (MCU).

The power supply circuit may include a converter configured to convert a voltage of the power signal received from the power supply device through the power terminal to a predetermined voltage to drive the communication circuit and the control circuit.

The control circuit may be configured to control the power transmission circuit to transmit a power signal for identifying the power reception device, based on that the power supply device is identified, through the communication circuit, as a device which supports a programmable power supply (PPS) function for adjusting the input voltage.

The control circuit may be configured to turn on a light emitting diode (LED) included in the wireless charger or make the LED flicker, based on that the power supply device is identified, through the communication circuit, as a device which does not support the PPS function.

According to an embodiment, a method of operating a wireless charger (for example, 203 of FIG. 2) may include an operation of receiving a message making a request for changing an output voltage of a power signal output to a power reception device (for example, 202 of FIG. 2) through a coil of the wireless charger through the coil The method may include an operation of outputting a message making a request for changing an input voltage of a power signal input from a power supply device (for example, 201 of FIG. 2) through a power terminal of the wireless charger to the power supply device through a data terminal of the wireless charger, based on that the message making the request for changing the output voltage is received. The operation of outputting the message making the request for changing the input voltage may include an operation of outputting a second request message making a request for reducing the input voltage to the power supply device through the data terminal, based on that a first request message making a request for reducing the output voltage is received and an operation of outputting a fourth request message making a request for increasing the input voltage to the power supply device through the data terminal, based on that a third request message making a request for increasing the output voltage is received.

The operation of outputting the second request message may be performed based on that a control error value (CEV) included in the first request message is a negative number. The operation of outputting the fourth request message may be performed based on that a CEV included in the third request message is a positive number.

The method may further include an operation of identifying the input voltage, an operation of outputting a message making a request for fixing the input voltage to a minimum value to the power supply device through the data terminal, based on that the input voltage is equal to or smaller than the predetermined minimum value and an operation of increasing a frequency of the power signal output from the coil to the power reception device, based on that the message making the request for reducing the output voltage is received from the power reception device in a state where the input voltage is fixed to the minimum value.

The method may further include an operation of identifying the input voltage, an operation of outputting a message making a request for fixing the input voltage to a maximum value to the power supply device through the data terminal, based on that the input voltage is larger than or equal to the predetermined maximum value and an operation of increasing a frequency of the power signal output from the coil to the power reception device, based on that the message making the request for increasing the output voltage is received from the power reception device in a state where the input voltage is fixed to the maximum value.

The method may further include an operation of transmitting a power signal for identifying the power reception device though the coil, based on that the power supply device is a device which supports a programmable power supply (PPS) function for adjusting the input voltage.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Any of the features described herein may be combined with any of the other features described herein, in any combination.

## Claims

1. A wireless charger (203) comprising:
a coil (230);
a connector (210) comprising a power terminal (213) and a data terminal (211);
a power transmission circuit (220) connected to the power terminal and configured to convert a current of a power signal received from a power supply device (201) through the power terminal from a direct current (DC) to an alternating current (AC) and output the AC to the coil;
communication circuits (240 and 250) connected to the data terminal and the coil and configured to communication with the power supply device through the data terminal and communicate with a power reception device 202 through the coil;
a control circuit (299) configured to control the power transmission circuit and the communication circuit; and
a power supply circuit (260) connected to the power terminal and configured to supply the power signal received from the power supply device through the power terminal to the communication circuit and the control circuit,
wherein the control circuit is configured to:
control the communication circuit to output a second request message making a request for reducing an input voltage of the power signal input from the power supply device through the power terminal to the power supply device through the data terminal, based on that the communication circuit receives a first request message making a request for reducing an output voltage of the power signal output to the power reception device through the coil; and
control the communication circuit to output a fourth request message making a request for increasing the input voltage to the power supply device through the data terminal, based on that the communication circuit receives a third request message making a request for increasing the output voltage.

2. The wireless charger of claim 1, wherein the control circuit is configured to:
control the communication circuit to output the second request message to the power supply device through the data terminal, based on that a control error value (CEV) included in the first request message is a negative number; and
control the communication circuit to output the fourth request message to the power supply device through the data terminal, based on that a CEV included in the third request message is a positive number.

3. The wireless charger of claim 2, wherein the control circuit is configured to set the input voltage in proportion to the CEV.

4. The wireless charger of claim 1, wherein the control circuit is configured to increase a frequency of the power signal output from the power transmission circuit to the coil, based on that the communication circuit receives the message making the request for reducing the output voltage in a state where the input voltage is fixed to a minimum value.

5. The wireless charger of claim 1, wherein the control circuit is configured to reduce a frequency of the power signal output from the power transmission circuit to the coil, based on that the communication circuit receives the message making the request for increasing the output voltage in a state where the input voltage is fixed to a maximum value.

6. The wireless charger of claim 1, wherein the communication circuit and the control circuit are included in one chip.

7. The wireless charger of claim 6, wherein the control circuit comprises a microcontroller unit (MCU).

8. The wireless charger of claim 1, wherein the power supply circuit comprises a converter configured to convert a voltage of the power signal received from the power supply device through the power terminal to a predetermined voltage to drive the communication circuit and the control circuit.

9. The wireless charger of one of claims 1 to 8, wherein the control circuit is configured to control the power transmission circuit to transmit a power signal for identifying the power reception device, based on that the power supply device is identified, through the communication circuit, as a device which supports a programmable power supply (PPS) function for adjusting the input voltage.

10. The wireless charger of claim 9, wherein the control circuit is configured to turn on a light emitting diode (LED) included in the wireless charger or make the LED flicker, based on that the power supply device is identified, through the communication circuit, as a device which does not support the PPS function.

11. A method of operating a wireless charger (230), the method comprising:
receiving a message making a request for changing an output voltage of a power signal output to a power reception device (202) through a coil (230) of the wireless charger through the coil; and
outputting a message making a request for changing an input voltage of a power signal input from a power supply device (201) through a power terminal (213) of the wireless charger to the power supply device through a data terminal (211) of the wireless charger, based on that the message making the request for changing the output voltage is received,
wherein the outputting of the message making the request for changing the input voltage comprises:
outputting a second request message making a request for reducing the input voltage to the power supply device through the data terminal, based on that a first request message making a request for reducing the output voltage is received; and
outputting a fourth request message making a request for increasing the input voltage to the power supply device through the data terminal, based on that a third request message making a request for increasing the output voltage is received.

12. The method of claim 11, wherein the outputting of the second request message is performed based on that a control error value (CEV) included in the first request message is a negative number, and
wherein the outputting of the fourth request message is performed based on that a CEV included in the third request message is a positive number.

13. The method of claim 11, further comprising:
identifying the input voltage;
outputting a message making a request for fixing the input voltage to a minimum value to the power supply device through the data terminal, based on that the input voltage is equal to or smaller than the predetermined minimum value; and
increasing a frequency of the power signal output from the coil to the power reception device, based on that the message making the request for reducing the output voltage is received from the power reception device in a state where the input voltage is fixed to the minimum value.

14. The method of claim 11, further comprising:
identifying the input voltage;
outputting a message making a request for fixing the input voltage to a maximum value to the power supply device through the data terminal, based on that the input voltage is larger than or equal to the predetermined maximum value; and
increasing a frequency of the power signal output from the coil to the power reception device, based on that the message making the request for increasing the output voltage is received from the power reception device in a state where the input voltage is fixed to the maximum value.

15. The method of claim 11, further comprising transmitting a power signal for identifying the power reception device though the coil, based on that the power supply device is a device which supports a programmable power supply (PPS) function for adjusting the input voltage.
